Europäisches Patentamt

European Patent Office

Office européen des brevets

(19)

(11) EP 0 922 209 B1

(12) **EUROPÄISCHE PATENTSCHRIFT**

(45) Veröffentlichungstag und Bekanntmachung des Hinweises auf die Patenterteilung:
**07.07.2004 Patentblatt 2004/28**

(21) Anmeldenummer: **97951815.6**

(22) Anmeldetag: **27.11.1997**

(51) Int Cl.$^7$: **G01M 3/28**, F02M 65/00

(86) Internationale Anmeldenummer:
**PCT/DE1997/002771**

(87) Internationale Veröffentlichungsnummer:
**WO 1998/040713 (17.09.1998 Gazette 1998/37)**

(54) **VORRICHTUNG ZUR MESSUNG VON HYDRAULISCHEN DURCHFLUSSMENGEN UND LECKAGEN AN EINEM PRÜFLING**

DEVICE FOR MEASURING HYDRAULIC DISCHARGE VOLUMES AND LEAKAGES IN A TEST PIECE

DISPOSITIF POUR MESURER DES DEBITS ET DES FUITES HYDRAULIQUES SUR UNE EPROUVETTE

(84) Benannte Vertragsstaaten:
**DE FR GB IT**

(30) Priorität: **07.03.1997 DE 19709423**

(43) Veröffentlichungstag der Anmeldung:
**16.06.1999 Patentblatt 1999/24**

(73) Patentinhaber: **ROBERT BOSCH GMBH**
**70442 Stuttgart (DE)**

(72) Erfinder:
 • **SCHÖFFEL, Eberhard**
 **D-96049 Bamberg (DE)**
 • **ERNST, Josef**
 **D-91330 Eggolsheim (DE)**

(56) Entgegenhaltungen:
**DE-A- 4 205 453      US-A- 5 017 909**
**US-A- 5 065 616      US-A- 5 152 167**
**US-A- 5 212 979**

**Beschreibung**

Stand der Technik

Die Erfindung betrifft eine Vorrichtung zur Messung von hydraulischen Durchflußmengen und Leckagen an einem Prüfling, umfassend eine Meßstrecke, an die ein Prüfling angekoppelt ist, und einen in der Meßstrecke angeordneten kapazitiven Sensor, der sowohl von wenigstens einem Meßmedium als auch von wenigstens einem Medium zur Erzeugung eines auf das Meßmedium wirkenden Drucks (Druckmedium) beaufschlagbar ist.

Eine derartige Vorrichtung geht beispielsweise aus der DE 42 05 453 A1 hervor. Bei dieser Vorrichtung wird der Meßstrecke sowohl das Meßmedium als auch das Druckmedium über eigens dafür vorgesehene Versorgungsleitungen mittelbar über einen Ausgleichsbehälter zugeführt. Der Einlaß/Auslaß für das Druckmedium und auch für das Meßmedium sind an dem Ausgleichsbehälter angeordnet, wobei der Einlaß des Druckmediums nicht beispielsweise durch ein Ventil verschlossen werden kann. Der Prüfling ist über eine Leitung mit der Meßstrecke verbunden. Bei einer derartigen Vorrichtung ist die Messung eines großen Durchflußbereichs problematisch. Darüber hinaus kann eine derartige Vorrichtung zur Messung von hydraulischen Durchflußmengen und Leckagen an Prüflingen nicht bei sehr hohen Drücken eingesetzt werden, da als Druckmedium Luft verwendet wird, die aufgrund ihrer Kompressibilität die Einhaltung beträchtlicher Sicherheitsvorschriften erfordert.

Aus der US 5 017 909 geht eine Vorrichtung zur kapazitiven Erfassung eines Flüssigkeitsstandes hervor, welche es ermöglicht, das Über- oder Unterschreiten eines Flüssigkeitsstandes in einem Behälter durch eine Signallampe zu signalisieren.

Die Messung eines in einem Behälter herrschenden Drucks auf visuellem und optischem Wege mittels des Flüssigkeitsstands zweier in einem Behälter aneinander grenzender Flüssigkeiten geht aus der US 5 065 616 hervor.

Ferner geht die Erfassung einer Leckage in einem fluidischen System aus der US 5 152 167 hervor, bei dem eine Leckage über einen in einem Reservoir befindlichen Flüssigkeitsstand, der jedoch nicht kapazitiv gemessen wird, erfaßt wird.

Der Erfindung liegt die Aufgabe zugrunde, eine Vorrichtung zur Messung von hydraulischen Durchflußmengen und Leckagen an einem Prüfling der gattungsgemäßen Art derart zu verbessern, daß auf technisch einfach zu realisierende Weise Messungen mit unterschiedlichen Anforderungen, beispielsweise Messungen bei hohen Drücken oder Messungen in einem großen Durchflußbereich u.dgl. möglich sind.

Vorteile der Erfindung

Diese Aufgabe wird bei einer Vorrichtung zur Messung von hydraulischen Durchflußmengen und Leckagen an einem Prüfling der eingangs beschriebenen Art erfindungsgemäß dadurch gelöst, daß ein Einlaß/Auslaß für das Meßmedium an einer dem Prüfling zugewandten Seite der Meßstrecke und ein Einlaß/Auslaß für das Druckmedium an einer dem Prüfling abgewandten Seite des Meßmediums direkt an der Meßstrecke ausgebildet sind, und dass zwischen den Zulauf des Prüflings und der Meßstrecke ein Verwirblungselement zur Erzeugung einer Drehströmung in den Prüfling angeordnet ist.

Die direkte Ausbildung des Einlasses/Auslasses für das Meßmedium sowie des Einlasses/Auslasses für das Druckmedium an der Meßstrecke hat den besonders großen Vorteil, daß sowohl das Meßmedium als auch das Druckmedium der Meßstrecke und damit auch dem Prüfling sehr schnell und ohne Umwege zugeführt werden können. Insbesondere kann hierdurch die Meßstrecke direkt mit dem Meßmedium und dem Druckmedium beaufschlagt werden. Diese Anordnung erlaubt die präzise Einstellung eines Drucks in der Meßstrecke und damit in dem Prüfling.

Vorteilhafterweise sind der Einlaß/Auslaß für das Meßmedium und der Einlaß/Auslaß für das Druckmedium durch Ventile absperrbar.

Eine vorteilhafte Ausführungsform, die insbesondere eine Vielzahl von unterschiedlichen Meßmethoden zuläßt, sieht vor, daß diese Ventile druckabhängig ansteuerbar sind. Bei einem Ausführungsbeispiel, bei dem insbesondere ein großer Durchflußbereich überdeckt werden soll, ist vorgesehen, daß der Meßstrecke ein Ausgleichsbehälter parallel schaltbar ist.

Bei einer anderen vorteilhaften Ausführungsform, die insbesondere für hydraulische Durchflußmengen im Zulauf bei Niederdruck verwendbar ist, ist vorgesehen, daß benachbart zu dem Einlaß/Auslaß für das Druckmedium an der Meßstrecke ein über ein druckabhängig ansteuerbares Ventil zuschaltbarer Druckspeicher angeordnet ist.

Insbesondere zur guten Ankopplung des unter Druck stehenden Meßmediums an den Prüfling und zur leichten Ausspülung von eventuell entstehenden Luftblasen ist vorteilhafterweise vorgesehen, daß zwischen dem Zulauf (der Hochdruckseite) des Prüflings und der Meßstrecke ein Verwirbelungselement zur Erzeugung einer Drehströmung in dem Prüfling angeordnet ist.

Was die Ausbildung des Verwirbelungselements betrifft, sind rein prinzipiell die unterschiedlichsten Ausführungsformen, welche eine Drehströmung in dem Prüfling erzeugen, denkbar. Eine vorteilhafte Ausführungsform sieht vor, daß das Verwirbelungselement eine zylindrische Scheibe mit in axialer und azimutaler Richtung geneigt angeordneten Öffnungen ist. Ein derartiges Verwirbelungselement ist einerseits besonders einfach herstellbar und erzeugt andererseits besonders effektive Drehströmungen in dem Prüfling.

Hinsichtlich der Ausbildung der Meßstrecke sowie der Ausbildung des kapazitiven Sensors wurden bislang keine näheren Angaben gemacht. Ein vorteilhaftes Ausführungsbeispiel sieht vor, daß die Meßstrecke die Gestalt eines Zylinders hat und daß der kapazitive Sensor ein Zylinderkondensator ist. Auf diese Weise kann der kapazitive Sensor, der als Zylinderkondensator in der als Zylinder ausgebildeten Meßstrecke angeordnet ist, auf besonders einfache Weise von dem Meßmedium und dem Druckmedium beaufschlagt werden, da Meßstrecke und kapazitiver Sensor gewissermaßen zusammenfallen.

Rein prinzipiell können als Meßmedium sowie als Druckmedium die unterschiedlichsten Fluide verwendet werden. Bei einer vorteilhaften Ausführungsform ist vorgesehen, daß das Meßmedium eine Hydraulikflüssigkeit ist und daß das Druckmedium Luft ist.

Bei einer anderen vorteilhaften Ausführungsform ist vorgesehen, daß das Meßmedium und das Druckmedium jeweils zwei Flüssigkeiten sind, welche miteinander nicht mischbar sind, und welche unterschiedliche Dielektrizitätskonstanten und Dichten besitzen.

Falls die hydraulische Flüssigkeit eine merkliche elektrische Leitfähigkeit besitzt, wird vorteilsweise eine der Elektroden, welche die kapazitive Sonde bilden, mit einem dünnen, homogenen elektrisch isolierenden Überzug versehen.

Falls die kapazitive Sonde ein Rohrkondensator ist, ist vorzugsweise der Mittelleiter mit dem isolierenden Überzug versehen.

Um eine Abkopplung von der Meßstrecke zu ermöglichen, kann bei einer Ausführungsform vorgesehen sein, daß zwischen dem Prüfling und der Meßstrecke ein Absperrventil angeordnet ist.

Zeichnung

Weitere Merkmale und Vorteile der Erfindung sind Gegenstand der nachfolgenden Beschreibung sowie der zeichnerischen Darstellung einiger Ausführungsbeispiele.

In der Zeichnung zeigen:

Fig. 1 ein erstes Ausführungsbeispiel einer erfindungsgemäßen Vorrichtung zur Messung von hydraulischen Durchflußmengen und Leckagen an einem Prüfling;

Fig. 2 ein zweites Ausführungsbeispiel einer erfindungsgemäßen Vorrichtung zur Messung von hydraulischen Durchflußmengen und Leckagen an einem Prüfling;

Fig. 3 ein drittes Ausführungsbeispiel einer erfindungsgemäßen Vorrichtung zur Messung von hydraulischen Durchflußmengen und Leckagen an einem Prüfling;

Fig. 4 ein viertes Ausführungsbeispiel einer erfindungsgemäßen Vorrichtung zur Messung von hydraulischen Durchflußmengen und Leckagen an einem Prüfling;

Fig. 5 eine andere Ankopplung des Prüflings an die Meßstrecke bei dem in Fig. 4 dargestellten Ausführungsbeispiel einer erfindungsgemäßen Vorrichtung zur Messung von hydraulischen Durchflußmengen und Leckagen an einem Prüfling;

Fig. 6 eine weitere Ankopplung des Prüflings an die Meßstrecke bei dem in Fig. 4 dargestellten Ausführungsbeispiel einer erfindungsgemäßen Vorrichtung zur Messung von hydraulischen Durchflußmengen und Leckagen an einem Prüfling und

Fig. 7 ein Prinzipschaltbild einer Auswerteschaltung, die bei den in Fig. 1 bis Fig. 6 dargestellten erfindungsgemäßen Vorrichtungen zur Messung von hydraulischen Durchflußmengen und Leckagen einsetzbar ist.

Beschreibung der Ausführungsbeispiele

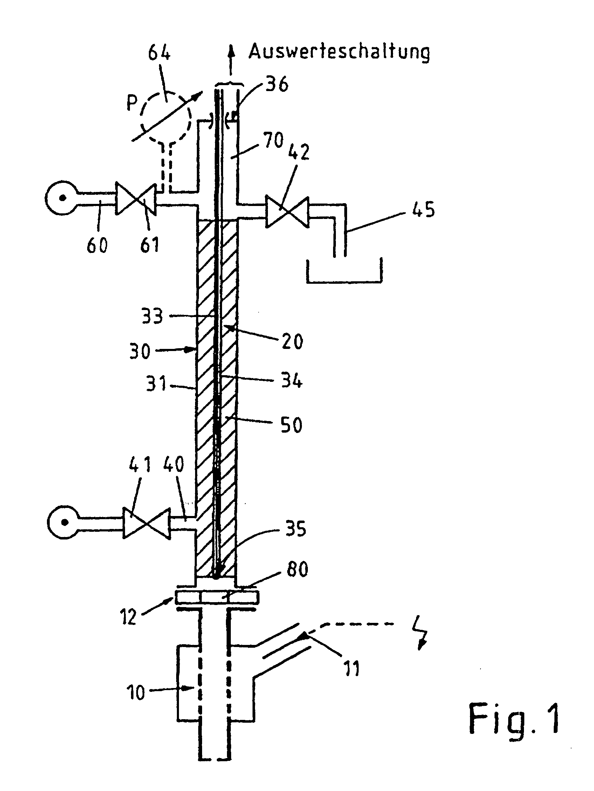

Ein Ausführungsbeispiel einer Vorrichtung zur Messung von hydraulischen Durchflußmengen und Leckagen an einem Prüfling 10, beispielsweise einem in der Automobiltechnik verwendeten Einspritzventil, dargestellt in Fig. 1, umfaßt eine Meßstrecke 20, die in etwa senkrecht verläuft und an deren unterem Ende der Prüfling 10 angekoppelt ist. In der Meßstrecke 20 ist ein kapazitiver Sensor 30 in Form eines Zylinderkondensators, dessen Außenzylinder 31 mit dem Außenrohr der Meßstrecke 20 zusammenfällt und dessen Mittelleiter 33 in dem Außenzylinder 31 und damit dem Außenrohr der Meßstrecke 20 im wesentlichen zentral angeordnet ist.

Der Prüfling 10 ist über ein Dichtelement 12 unmittelbar an die Meßstrecke 20 angekoppelt.

An der dem Prüfling 10 zugewandten Seite des kapazitiven Sensors 30 ist eine elektrisch isolierte, perforierte Mittelleiterbefestigung 35 vorgesehen.

An der dem Prüfling 10 abgewandten Seite des kapazitiven Sensors 30 ist der Mittelleiter 33 über eine elektrisch isolierende, druckdichte Durchführung 36 nach außen an eine weiter unten näher erläuterte Auswerteschaltung geführt.

An der dem Prüfling 10 zugewandten Seite der Meßstrecke 20 ist ein Einlaß/Auslaß 40 für ein Meßmedium 50 vorgesehen, über welche die Meßstrecke 20 und damit der kapazitive Sensor 30 in Form des Zylinderkondensators mit dem Meßmedium 50 beaufschlagbar sind.

Falls das hydraulische Meßmedium 50 elektrisch leitfähig ist, ist der Mittelleiter 33 mit einem dünnen, homogenen, elektrisch isolierenden Überzug 34 versehen.

Der Einlaß/Auslaß 40 des Meßmediums 50 ist über ein druckabhängig ansteuerbares (nicht dargestellt) Ventil 41 verschließbar.

Ferner ist auf der dem Prüfling 10 abgewandten Seite der Meßstrecke 20 ein Einlaß/Auslaß 60 vorgesehen, über den in die Meßstrecke 20 ein Medium zur Erzeugung eines auf das Meßmedium 50 wirkenden Drucks, d.h. ein Druckmedium 70 zuführbar ist. Der Einlaß/Auslaß 60 für das Druckmedium 70 ist über ein druckabhängig ansteuerbares Ventil 61 verschließbar. Dem Ventil 61 nachgeschaltet ist ein Manometer 64, welches den in der Meßstrecke 20 herrschenden Druck erfaßt.

Ebenfalls auf der dem Prüfling 10 abgewandten Seite der Meßstrecke 20 ist ein Entlastungs-/Rücklaufventil 42 vorgesehen, welches in geöffnetem Zustand ein Entfernen überflüssigen Meßmediums 50 aus der Meßstrecke 20 über eine Leitung 45 ermöglicht.

Zwischen dem Prüfling 10 und der Meßstrecke 20 und damit dem kapazitiven Sensor 30 ist ferner ein Verwirbelungselement 80 zur Erzeugung einer Drehströmung in dem Prüfling 10 angeordnet. Durch diese Drehströmung werden insbesondere Blasen o.dgl., die bei Beaufschlagung des Prüflings 10 mit dem Meßmedium 50 entstehen können, aus dem Meßmedium 50 und dem Prüfling 10 ausgespült. Der Prüfling 10 wird dazu über die elektrische Ansteuerleitung 11 kurz geöffnet. Das Verwirbelungselement weist die Gestalt einer zylindrischen Scheibe mit in axialer und azimutaler Richtung geneigt angeordneten Öffnungen (nicht dargestellt) auf.

Bei der in Fig. 1 dargestellten Vorrichtung, die insbesondere zur Durchflußmessung im Niederdruckbereich (2 bis 10 bar) geeignet ist, wird vorzugsweise als Meßmedium eine Hydraulikflüssigkeit und als Druckmedium Luft verwendet. Der Mittelleiter 33 weist einen Durchmesser von etwa 0,5 mm auf, wohingegen der Außenzylinder 30 einen Durchmesser von etwa 2 mm aufweist. Die Länge des Zylinderkondensators beträgt etwa 100 mm. Vor der Messung wird die Meßstrecke 20 gefüllt. Zur Messung sind die Ventile 41, 42 geschlossen, während das Ventil 61 in dem Einlaß/Auslaß 60 des Druckmediums 70 geöffnet ist. Auf diese Weise wird die Meßstrecke 20 mit einem Prüfdruck p beaufschlagt, der durch das Manometer 64 erfaßt wird. Der Prüfling 10 wird nun gesteuert über eine Steuerleitung 11 geöffnet, und es wird der Pegelstand des Meßmediums 50 durch den kapazitiven Sensor 30 erfaßt und an eine weiter unten näher zu beschreibende Auswerteschaltung weitergegeben.

Der Pegelstand in der Meßstrecke 20 und damit in dem kapazitiven Sensor 30 in Form des Zylinderkondensators ist ein Maß für die Durchflußmenge oder eine Leckage in dem Prüfling 10.

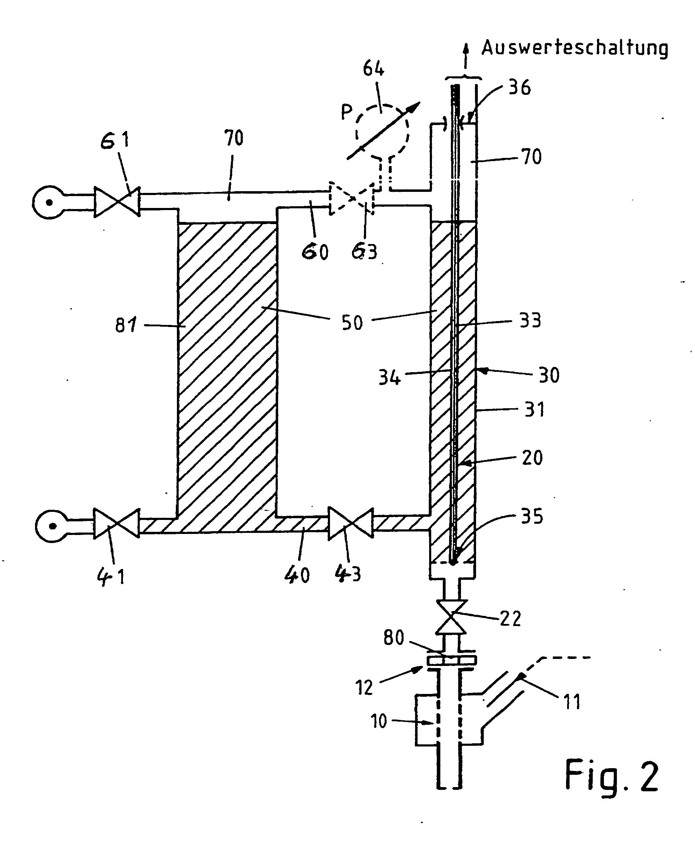

Bei einem zweiten Ausführungsbeispiel, dargestellt in Fig. 2, sind diejenigen Elemente, die mit denen des ersten identisch sind, mit denselben Bezugszeichen versehen, so daß bezüglich deren Beschreibung auf die Ausführungen zum ersten Ausführungsbeispiel voll inhaltlich Bezug genommen wird. Das in Fig. 2 dargestellte Ausführungsbeispiel einer Vorrichtung zur Messung von hydraulischen Durchflußmengen und Leckagen unterscheidet sich von dem in Fig. 1 dargestellten dadurch, daß der Meßstrecke 20 ein Ausgleichs- oder Vorratsbehälter 81 über Ventile 43, 63 parallel schaltbar ist.

Ferner ist zwischen der Meßstrecke 20 und der Ankopplung des Prüflings 10 an die Meßstrecke 20, d. h. zwischen dem Dichtelement 12 und Verwirbelungselement 80 und dem prüflingseitigen Ende der Meßstrecke 20 ein Absperrventil 22 angeordnet. Diese Vorrichtung ist vorgesehen für Mengen- und Dichtheitsmessungen im Zulauf, d.h. an der Hochdruckseite eines mit einem Hochdruck zu beaufschlagenden Prüflings 10, beispielsweise ein Hochdruck-Einspritzventil, wobei Prüfdrücke zwischen 100 und 250 bar vorgesehen sind.

Diese Vorrichtung ist insbesondere dann vorteilhaft, wenn ein großer Durchflußbereich überdeckt werden soll. In diesem Falle wird der Vorratsbehälter der Meßsonde parallel geschaltet, d.h. die Ventile 43, 63 sind während der Messung geöffnet. Ferner wird diese Vorrichtung insbesondere benutzt, wenn große Spülmengen bereitgestellt werden sollen. Auch hierbei ist während des Spülens der Ausgleichs-/Vorratsbehälter 81 der Meßsonde 20 parallel geschaltet.

Die Vorrichtung erlaubt ferner, die Messung mit einem eingeschlossenen Gasvolumen durchzuführen. Während der Messung sind dabei alle Ventile außer dem Ventil 63 geschlossen. Auf diese Weise bildet sich in dem oberen, von dem Druckmedium 70 beaufschlagten Bereich der Meßsonde 20 sowie in dem oberen, von dem Druckmedium 70 beaufschlagten Bereich des Ausgleichs-/Vorratsbehälters ein definiertes Gasvolumen aus. Dieses Gasvolumen kann durch Zuführen von Medium über geöffnete Ventile 41, 43 komprimiert werden. Durch diese Kompression entsteht ein Druck p über dem Meßmedium 50, der für die Messung des Prüflings 10 verwendet werden kann. Während der Messung kann bei geschlossenem Ventil 43 über das geöffnete Ventil 41 dem Ausgleichs-/Vorratsbehälter Meßmedium 50 abhängig von dem durch das Manometer 64 erfaßten Druck p zugeführt werden. Nach Schließen des Ventils 41 und Öffnen des Ventils 43 wird der Pegel des Meßmediums 50 in der Meßstrecke 30 nach dem Prinzip der kommunizierenden Röhren ausgeglichen. Die obenbeschriebene Meßmethode ist insbesondere bei sehr hohen Meßdrücken von großem Vorteil, da das Gasvolumen erhalten bleibt. Das Füllen der Vorrichtung kann mit geringem Druck des Druckmediums 70 erfolgen, wenn die Vorrichtung zuerst ganz mit dem Druckmedium 70, d.h. mit einem Gas gefüllt wird, sodann das Ventil 61 geschlossen wird und die Hochdruckerzeugung durch Zuführen von Meßmedium 50 bei geöffneten Ventilen 41, 43 erfolgt. Auch bei dieser Vorrichtung kann die Meßstrecke 20 sehr schnell gefüllt werden.

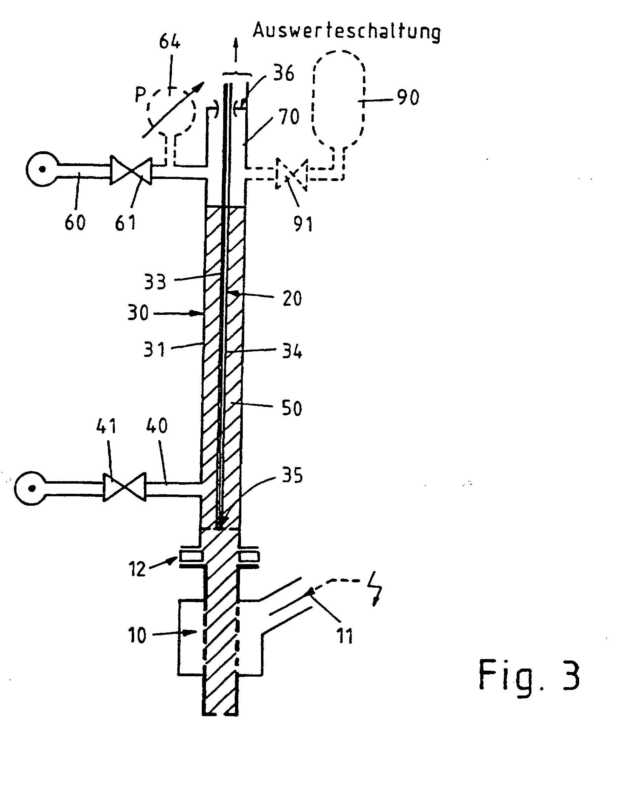

Bei einem dritten Ausführungsbeispiel, dargestellt in Fig. 3, sind diejenigen Elemente, die mit denen des ersten identisch sind, mit denselben Bezugszeichen versehen, so daß bezüglich deren Beschreibung auf die Ausführungen zum ersten Ausführungsbeispiel voll inhaltlich Bezug genommen wird.

Das in Fig. 3 dargestellte Ausführungsbeispiel unterscheidet sich von dem in Fig. 1 dargestellten dadurch, daß statt eines auf der dem Prüfling 10 abgewandten Seite der Meßstrecke 20 angeordneten Rücklaufventils ein Druckspeicher 90 angeordnet ist, der über ein druckabhängig ansteuerbares Ventil 91 der Meßstrecke 20 zuschaltbar ist.

Diese Vorrichtung wird insbesondere für hydraulische Durchflußmessungen im Zulauf des Prüflings 10 bei Niederdruck, das heißt bei einem Prüfdruck von 2 bis 10 bar, verwendet. Die Steuerung der Ventile 61, 41 und 91 erfolgt abhängig vom vom Manometer 64 erfaßten Druck p, derart, daß niemals Meßmedium 50 in den obersten Bereich der Meßstrecke 20 gelangt. Die Vorrichtung erlaubt es, einen niedrigen Druck des Druckmediums 70, z.B. bei Verwendung von Gas als, Druckmedium 70 beispielsweise einen niedrigen Pneumatikdruck, durch einen höheren Druck des Meßmediums 50 in den Druckspeicher 90 zu komprimieren. Hierbei wirkt die Säule des Meßmediums 50 als Kolben.

Bei dieser Vorrichtung ist besonders vorteilhaft, daß pro Meßzyklus nur eine geringe Gasmenge verloren geht, da das Ventil 91 nach der Messung geschlossen wird. Die Verwendung dieser Vorrichtung ist darüber hinaus dann vorteilhaft, wenn eine Druckversorgung, beispielsweise eine Pneumatikversorgung, zur Erzeugung des in dem Druckmedium 70 herrschenden Drucks nicht stabil arbeitet.

Darüber hinaus kann durch diese Vorrichtung auf einfache Weise ein höherer Druck des Druckmediums 70 mit Hilfe des Meßmediums 50 erzeugt werden.

Bei den in Fig. 1 bis Fig. 3 dargestellten Vorrichtungen wird als Meßmedium 50 eine Hydraulikflüssigkeit verwendet, wohingegen als Druckmedium 70 ein Gas verwendet wird.

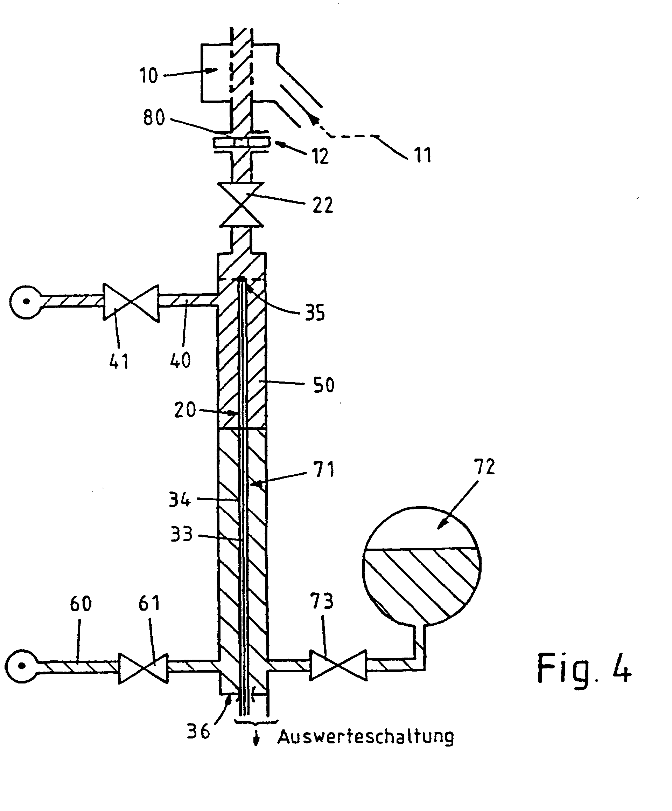

Denkbar ist aber auch eine Vorrichtung zur Messung von hydraulischen Durchflußmengen und Leckagen, bei der das Meßmedium 50 und das Druckmedium 70 jeweils zwei leitfähige, nicht miteinander mischbare Flüssigkeiten, beispielsweise Hydraulikflüssigkeiten, sind. Ein Ausführungsbeispiel einer derartigen Anordnung ist in Fig. 4 dargestellt. Die in Fig. 4 dargestellte Ausführungsform unterscheidet sich von der in Fig. 1 dargestellten Ausführungsform dadurch, daß statt eines gasförmigen, d.h. kompressiblen Druckmediums 70 ein nicht kompressibles flüssiges Druckmedium 71 verwendet wird, welches eine höhere Dichte als das Meßmedium 50 besitzt. Dieses wird auf der dem Prüfling 10 abgewandten Seite der Meßstrecke 20 über den Einlaß/Auslaß 60 mit Hilfe des druckabhängig ansteuerbaren Ventils 61 wie oben beschrieben zugeführt. Etwa auf gleicher Höhe der Meßstrecke 20 ist ferner ein über ein Ventil 73 zuschaltbares Druckausgleichsgefäß 72 vorgesehen, das wenigstens teilweise mit dem Druckmedium 71 gefüllt ist. Der Prüfling 10 ist von der Meßstrecke 20 über ein Absperrventil 22 entkoppelbar.

Falls eines der beiden hydraulischen Meßmedien 50, 71 eine merkliche elektrische Leitfähigkeit aufweist, wird der Mittelleiter 33 mit einem dünnen, homogenen, elektrisch isolierenden Überzug 34 versehen.

Der Vorteil dieser Vorrichtung liegt darin, daß sie bis zu extrem hohen Drücken (in der Größenordnung von 1000 bar) verwendet werden kann. Diese Vorrichtung ist insbesondere dann vorteilhaft, wenn beispielsweise aus Sicherheitsgründen ein gasförmiges Druckmedium 70 nicht einsetzbar ist, oder wenn ein gasförmiges Druckmedium 70 in dem Meßmedium 50 unter hohen Drücken löslich ist. Die Prüfung des Prüflings 10 auf Dichtheit oder die Messung einer Durchflußmenge geschieht auf die im Zusammenhang mit dem ersten Ausführungsbeispiel (Fig. 1) beschriebene Weise.

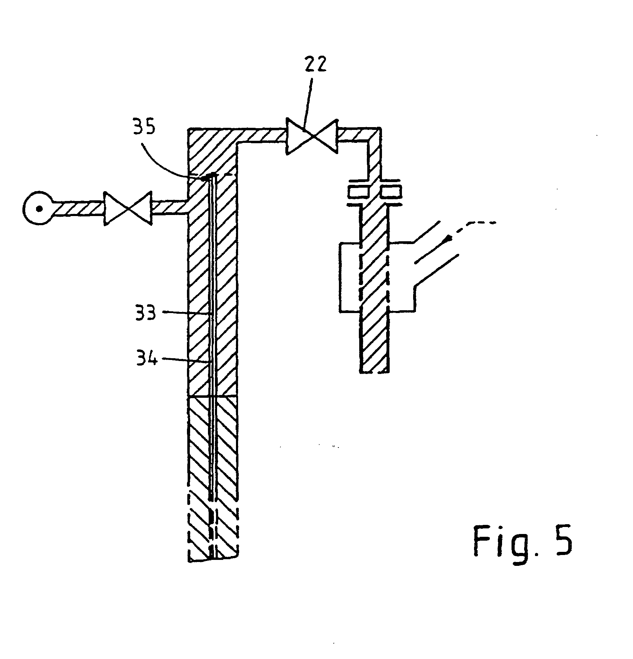

Die in Fig. 5 dargestellte Ausführungsform unterscheidet sich von der in Fig. 4 nur dadurch, daß der Prüfling nicht nach oben "abspritzt", sondern durch Umlenkung um 180° nach unten.

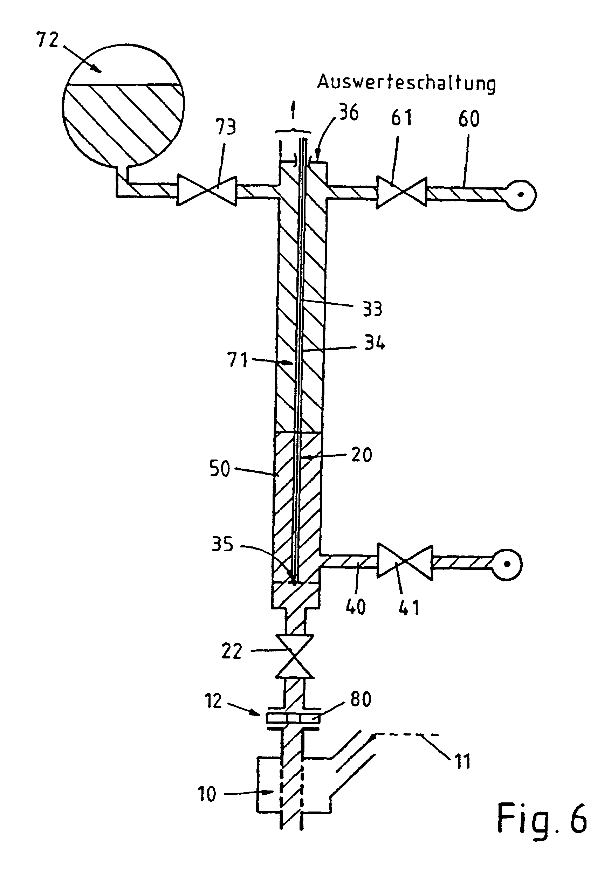

Die in Fig. 6 dargestellt Ausführungsform unterscheidet sich von der in Fig. 5 dadurch, daß das Druckmedium 71 eine geringere Dichte als das Meßmedium 50 besitzt. Diejenigen Elemente, die mit denen des in Fig. 5 dargestellten Ausführungsbeispiels identisch sind, sind mit denselben Bezugszeichen versehen, so daß bezüglich deren Beschreibung auf die obigen Ausführungen voll inhaltlich Bezug genommen wird.

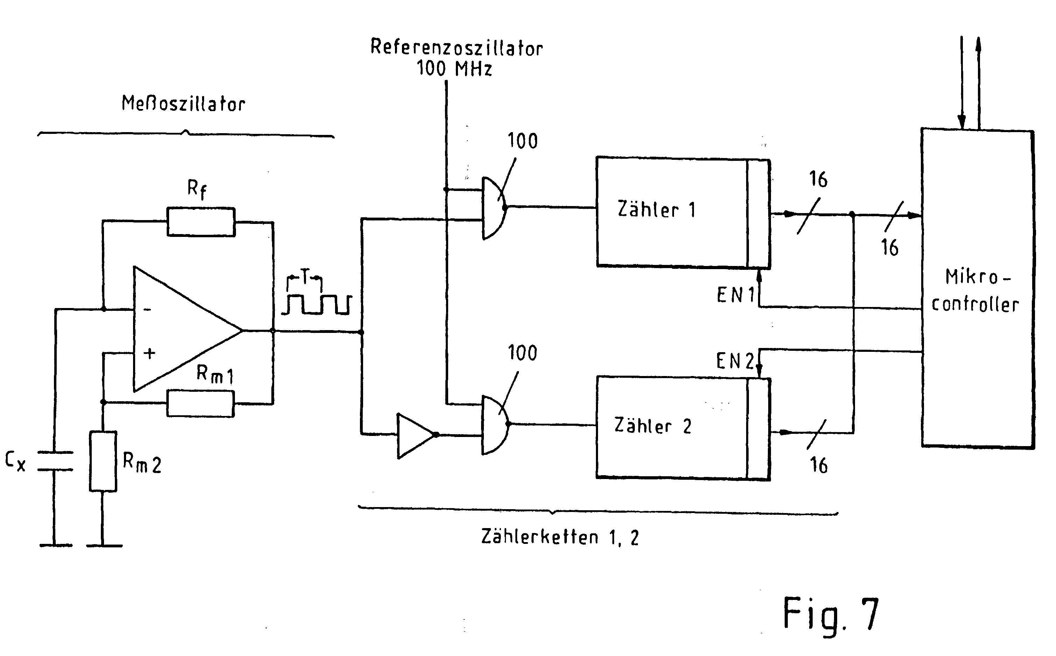

Die Messung der Kapazität des in der Meßstrecke 20 angeordneten kapazitiven Sensors 30 erfolgt wie in Fig. 7 schematisch dargestellt. Der kapazitive Sensor Cx ist zusammen mit Rück- und Mitkopplungswiderständen Rf, Rm1, Rm2 frequenzbestimmendes Element eines an sich bekannten Meßoszillators (Rechteckgenerators). Die sich ergebende Periodendauer T des Oszillators ist dabei direkt proportional zu Cx. Mit einer Kapazität Cx von etwa 20 pF, einem Rückkopplungswiderstand Rf = 5 MΩ, Mitkopplungswiderständen Rm1, Rm2 = 230 kΩ ergibt sich beispielsweise T zu 230 µs, d.h. eine Oszillatorfrequenz f von etwa 4,3 kHz. Das der Sondenkapazität entsprechende Meßoszillatorsignal wird zwei Zählerketten zugeführt, die jeweils einen Zähler 1 und einen Zähler 2 umfassen, wobei das dem Zähler 2 zugeführte Signal invertiert wird. Den Zählerketten ist jeweils ein NAND-Gatter 100 mit zwei Eingängen vorgeschaltet. Auf jeweils einen der beiden Eingänge wird ein gemeinsames 100 MHz-Signal eines Referenzoszillators gelegt, das über einen an sich bekannten Quarz-Oszillatorbaustein erzeugt wird. Das NAND-Gatter des Zählers 1 läßt dabei diese 100 MHz-Frequenz während der Zeit passieren, in der der Ausgang des Meßoszillators auf HIGH liegt. Da das für den Zähler 2 verwendete Meßoszillatorsignal invertiert ist, läßt das NAND-Gatter des Zählers 2 das 100 MHz-Signal während der LOW-Phase des Meßoszillatorsignals passieren.

Die Zähler 1, 2 der beiden Zählerketten sind jeweils 16-bit-Zähler. Ein Mikrocontroller liest die Zählerstände nacheinander aus.

Es wird eine Differenz zur Ablesung in einer vorhergehenden Meßoszillatorperiode ermittelt. Diese ergibt die Länge der jeweiligen Hälfte (HIGH/LOW) der Meßoszillatorperiode in 10 ns-Einheiten (100 MHz Referenzfrequenz). Die Addition der jeweils anderen, vorher gemessenen Halbperiode ergibt nach Messung jeder Halbperiode die momentane ganze Meßoszillatorperiode T in 10 ns-Einheiten. Für die oben erwähnte Zeitkonstante T = 230 µs ergibt sich demnach eine Periode zu etwa 23000.

Durch diese Art der verschachtelten Ablesung der Zählerketten ergibt sich eine sehr hohe zeitliche Auflösung (typischerweise beträgt diese etwa 120 µs). Auf diese Weise sind sehr schnelle Messungen möglich.

Zur Messung wird eine vorgegebene Anzahl von Meßwerten in einem Prüfstandsrechner (nicht dargestellt) verarbeitet. Durch die vorwählbare Anzahl solcher Messungen wird dann eine Ausgleichskurve mit einem konstanten, zeitproportional und exponentiell abklingenden Term gelegt nach folgender Formel:

Meßwert = Konstante + Undichtheit * t + K * exp(-t/to).

Der exponentiell abklingende Term trägt den Effekten Rechnung, welche insbesondere durch eingeschlossene Luft im Prüfling 10 erzeugt werden (adiabatische Erwärmung beim Aufschalten des Spül-/Prüfdruckes und nachfolgende Volumenverringerung durch Abkühlung). Die Zeitkonstante to ist im wesentlichen nur abhängig von dem verwendeten Prüfling 10, beispielsweise einer Einspritzventil-Familie, und kann daher vorher allgemeingültig bestimmt werden. Die Größe K ist ein Maß für das Volumen der eingeschlossenen Luft und kann überwacht werden.

Für langsame Messungen werden pro Meßwerterfassung typischerweise 80 Meßoszillatorperioden ausgelesen. Bei Mittelung über die letzten 10 Messungen im Abstand von typischerweise 50 bis 200 ms ergibt sich ein Meßwert von etwa 18.000.000 für eine gut gefüllte Sonde. Für eine leere Sonde ergibt sich etwa 15.000.000. Damit ist auch der Füllgrad der Sonde erkennbar, d.h. eine Erkennung von Störungen in der Versorgung des Meßmediums 50, eine Erkennung von einem Grobleck am Prüfling 10, ein zu hoher Lufteinschluß u.dgl..

**Patentansprüche**

1. Vorrichtung zur Messung von hydraulischen Durchflussmengen und Leckagen an einem Prüfling (10), umfassend eine Meßstrecke (20), an die der Prüfling (10) angekoppelt ist, und einen in der Meßstrecke (20) angeordneten kapazitiven Sensor (30), wobei die Meßstrecke (20) sowohl von wenigstens einem Meßmedium (50) als auch von wenigstens einem Medium zur Erzeugung eines auf das Meßmedium (50) wirkenden Drucks (Druckmedium (70)) beaufschlagt ist, wobei ein Einlaß/Auslaß (40) für das Meßmedium (50) an einer dem Prüfling (10) zugewandten Seite der Meßstrecke (20) und ein Einlaß/Auslaß (60) für das Druckmedium (70) an einer dem Prüfling (10) abgewandten Seite der Meßstrecke (20) direkt an der Meßstrecke (20) ausgebildet sind, **dadurch gekennzeichnet, dass** zwischen dem Zulauf des Prüflings (10) und der Meßstrecke (20) ein Verwirbelungselement (80) zur Erzeugung einer Drehströmung in dem Prüfling (10) angeordnet ist.

2. Vorrichtung nach Anspruch 1, **dadurch gekennzeichnet, dass** der Einlaß/Auslaß (40) für das Meßmedium (50) und der Einlaß/Auslaß (60) für das Druckmedium (70) durch ansteuerbare Ventile (41, 61) absperrbar sind.

3. Vorrichtung nach Anspruch 2, **dadurch gekennzeichnet, dass** die Ventile (41, 61) druckabhängig ansteuerbar sind.

4. Vorrichtung nach einem der Ansprüche 1 bis 3, **dadurch gekennzeichnet, dass** der Meßstrecke (20) ein Ausgleichs-/Vorratsbehälter (80) parallel schaltbar ist.

5. Vorrichtung nach einem der Ansprüche 1 bis 4, **dadurch gekennzeichnet, dass** benachbart zu dem Einlaß/Auslaß (40) für das Meßmedium (50) an der Meßstrecke (20) ein über ein druckabhängig ansteuerbares Ventil (91) zuschaltbarer Druckspeicher (90) angeordnet ist.

6. Vorrichtung nach Anspruch 1, **dadurch gekennzeichnet, dass** das Verwirbelungselement (80) eine zylindrische Scheibe mit in axialer und azimutaler Richtung geneigt angeordneten Öffnungen ist.

7. Vorrichtung nach einem der Ansprüche 1 bis 6, **dadurch gekennzeichnet, dass** die Meßstrecke (20) die Gestalt eines Zylinders hat und dass der kapazitive Sensor (30) ein Zylinderkondensator ist.

8. Vorrichtung nach einem der Ansprüche 1 bis 7, **dadurch gekennzeichnet, dass** das Meßmedium (50) eine Hydraulikflüssigkeit ist und dass das Druckmedium (70) Luft ist.

9.  Vorrichtung nach einem der Ansprüche 1 bis 8, **dadurch gekennzeichnet, dass** das Meßmedium (50) und das Druckmedium (71) zwei nicht miteinander mischbare Flüssigkeiten sind, welche unterschiedliche Dielektrizitätskonstanten und Dichten besitzen.

10. Vorrichtung nach einem der Ansprüche 1 bis 9, **dadurch gekennzeichnet, dass** eine der Elektroden des kapazitiven Sensors (30) mit einem elektrisch isolierenden Überzug (34) versehen ist.

11. Vorrichtung nach einem der Ansprüche 1 bis 9, **dadurch gekennzeichnet, dass** zwischen dem Prüfling (10) und der Meßstrecke (20) ein Absperrventil (22) angeordnet ist.


**Claims**

1.  Device for measuring hydraulic flow rates and leakages in a test piece (10), comprising a measurement section (20) to which the test piece (10) is coupled, and a capacitive sensor (30) arranged in the measurement section (20), the measurement section (20) having applied to it both at least one measurement medium (50) and at least one medium (pressure medium (70)) for producing a pressure acting on the measurement medium (50), an inlet/outlet (40) for the measurement medium (50) being constructed at an end of the measurement section (20) facing the test piece (10), and an inlet/outlet (60) for the pressure medium (70) being constructed directly at the measurement section (20) at an end of the measurement section (20) averted from the test piece (10), **characterized in that** a turbulence element (80) for producing a rotary flow in the test piece (10) is arranged between the intake of the test piece (10) and the measurement section (20).

2.  Device according to Claim 1, **characterized in that** the inlet/outlet (40) for the measurement medium (50) and the inlet/outlet (60) for the pressure medium (70) can be blocked by controllable valves (41, 61).

3.  Device according to Claim 2, **characterized in that** the valves (41, 61) can be controlled as a function of pressure.

4.  Device according to one of Claims 1 to 3, **characterized in that** a compensation vessel/reservoir (80) can be connected in parallel with the measurement section (20).

5.  Device according to one of Claims 1 to 4, **charac-**

**terized in that** a pressure accumulator (90) which can be switched in via a pressure-dependent controllable valve (91) is arranged next to the inlet/outlet (40) for the measurement medium (50) at the measurement section (20).

6.  Device according to Claim 1, **characterized in that** the turbulence element (80) is a cylindrical disc with openings arranged inclined in the axial and azimuthal directions.

7.  Device according to one of Claims 1 to 6, **characterized in that** the measurement section (20) has the shape of a cylinder, and **in that** the capacitive sensor (30) is a cylindrical capacitor.

8.  Device according to one of Claims 1 to 7, **characterized in that** the measurement medium (50) is a hydraulic fluid, and **in that** the pressure medium (70) is air.

9.  Device according to one of Claims 1 to 8, **characterized in that** the measurement medium (50) and the pressure medium (71) are two mutually immiscible fluids which have different dielectric constants and densities.

10. Device according to one of Claims 1 to 9, **characterized in that** one of the electrodes of the capacitive sensor (30) is provided with an electrically insulating coating (34).

11. Device according to one of Claims 1 to 9, **characterized in that** a shutoff valve (22) is arranged between the test piece (10) and the measurement section (20).


**Revendications**

1.  Dispositif pour mesurer des débits et des fuites hydrauliques sur une éprouvette (10), comprenant un parcours de mesure (20) auquel est accouplé l'éprouvette (10) et dans lequel se trouve un capteur capacitif (30), ce parcours de mesure (20) étant soumis à l'action à la fois d'au moins un fluide de mesure (50) et d'au moins un fluide de pression (70) pour produire la pression agissant sur le fluide de mesure (50) avec, montées directement sur le parcours de mesure (20), une entrée/sortie (40) pour le fluide de mesure (50) située du côté du parcours de mesure (20) en regard de l'éprouvette (10) ainsi qu'une entrée/sortie (60) pour le fluide de pression (70), située du côté du parcours de mesure (20) éloigné de l'éprouvette (10),
    **caractérisé en ce que**
    entre l'alimentation de l'éprouvette (10) et le parcours de mesure (20) est prévu un élément tourbillonnaire (80) pour créer un courant rotatif dans l'éprouvette (10).

2. Dispositif selon la revendication 1, **caractérisé en ce que** l'entrée/sortie (40) pour le fluide de mesure (50) et l'entrée/sortie (60) pour le fluide de pression (70) peuvent être obstruées par des soupapes commandées (41, 61).

3. Dispositif selon la revendication 2, **caractérisé en ce que** les soupapes (41, 61) peuvent être commandées en fonction de la pression.

4. Dispositif selon une des revendications 1 à 3, **caractérisé en ce que** un récipient d'alimentation/équilibrage (81) peut être connecté en parallèle au parcours de mesure (20).

5. Dispositif selon une des revendications 1 à 4, **caractérisé en ce que** près de l'entrée/sortie (60) pour le fluide de pression (70), se trouve un réservoir de pression (90) qui peut être connecté au circuit de mesure (20) par une soupape (91) commandable en fonction de la pression.

6. Dispositif selon la revendication 1, **caractérisé en ce que** l'élément tourbillonnaire (80) est un disque cylindrique percé d'ouvertures inclinées en direction axiale et azimutale.

7. Dispositif selon une des revendications 1 à 6, **caractérisé en ce que** le parcours de mesure (20) a la configuration d'un cylindre et le capteur capacitif (30) est un condensateur cylindrique.

8. Dispositif selon une des revendications 1 à 7, **caractérisé en ce que** le fluide de mesure (50) est un fluide hydraulique et le fluide de pression (70) est de l'air.

9. Dispositif selon une des revendications 1 à 8, **caractérisé en ce que** le fluide de mesure (50) et le fluide de pression (70) sont des fluides non miscibles entre eux et qui présentent des constantes diélectriques et des densités différentes.

10. Dispositif selon une des revendications 1 à 9, **caractérisé en ce que** les électrodes du capteur capacitif (30) sont garnies d'un revêtement (34) électriquement isolant.

11. Dispositif selon une des revendications 1 à 9, **caractérisé en ce que** une soupape d'arrêt (22) est montée entre l'éprouvette (10) et le parcours de mesure (20).

Auswerteschaltung

Fig. 1

Fig. 2

Fig. 3

Fig. 4

Auswerteschaltung

Fig. 5

Auswerteschaltung

Fig. 6

Fig. 7

Meßoszillator

Referenzoszillator 100 MHz

$R_f$

$R_{m1}$

$R_{m2}$

$C_x$

100

Zähler 1

EN 1

100

EN 2

Zähler 2

Zählerketten 1, 2

16

16

16

Mikro-controller

EP 0 922 209 B1